Europäisches Patentamt

(19) European Patent Office

Office européen des brevets

(11) **EP 0 724 212 A2**

(12) **EUROPEAN PATENT APPLICATION**

(43) Date of publication:
31.07.1996 Bulletin 1996/31

(51) Int. Cl.$^6$: **G06F 9/34**

(21) Application number: 95480191.6

(22) Date of filing: 20.12.1995

(84) Designated Contracting States:
DE FR GB

(30) Priority: 26.01.1995 US 378418

(71) Applicant: **INTERNATIONAL BUSINESS MACHINES CORPORATION**
Armonk, NY 10504 (US)

(72) Inventors:
• Bechade, Roland Albert
South Burlington, Vermont 05403 (US)
• Hayosh, Robert Francis
Winooski, Vermont 05404 (US)

(74) Representative: de Pena, Alain
Compagnie IBM France
Département de Propriété Intellectuelle
06610 La Gaude (FR)

(54) **Circuit for one cycle address calculation**

(57) Address calculation in X86 microprocessor family architectures is calculated in either 16 or 32-bit address mode with a minimum of hardware and a minimum delay. A circuit for address calculation calculates both the effective and linear addresses needed to generate an address in parallel. The circuit generates different addresses based on the mode of operation. The circuit uses the same carry save adder for generating both the linear and the effective addresses.

FIG.1

EP 0 724 212 A2

## Description

## BACKGROUND OF THE INVENTION

Field of the Invention

The present invention generally relates to address calculation in a microprocessor and, more particularly, to address calculation in either of a 16-bit or a 32-bit addressing mode.

Description of the Prior Art

The Intel Corporation, Santa Clara, California, introduced the 16-bit microprocessor designated as the 8086 microprocessor from which a family of microprocessors evolved. A variant of the 8086 microprocessor, the 8088 microprocessor, was used in first International Business Machines (IBM) Personal Computer (PC). The 8086/8088 microprocessors had 20 address lines permitting the processor access to up to 1 megabyte (MB) of memory. The family of microprocessors that have evolved included the 80286 16-bit microprocessor which was used in the IBM AT (Advanced Technology) PC. The 80286 microprocessor had a 24-bit address and operated in two modes, a "real mode", which emulated the architecture of the 8086 and 8088 microprocessors, and a "protected mode", which provided enlarged memory addressing and multi-tasking support. These enhancements enabled the processor to access up to 16MB of memory. The 80286 microprocessor was succeeded in turn by the 80386 microprocessor which was backward compatible with the 80286 and 8086 microprocessors but introduced new features, including enhanced memory addressing capabilities and introduced a new operating mode, virtual real mode operation which supported multiple 8086 sessions in a true multi-tasking environment. The 80386 microprocessor utilizes a memory management system organized to allow both segmentation addressing and demand paged addressing of memory. There are two variants of the 80386 microprocessor; the SX version which has 24 address lines and the DX version with 32 address lines. Thus, the DX version can address up to 4 gigabytes (GB) of memory. The 80486 microprocessor, although similar to the 80386 microprocessor in many ways, introduced a higher level of integration, eliminating many support chips and incorporating an on-chip math co-processor. The 80486 microprocessor also comes in two versions, the SX and DX versions, but this time the SX version is equivalent to the DX with the math coprocessor disabled. Both versions have 32 address lines. An even higher level of integration was introduced with Intel's Pentium® microprocessor, built upon the basic 80386 architecture like the 80486 microprocessor. This family of microprocessors has come to be known as the X86 family of microprocessors meaning in particular the 80386 32-bit microprocessor, its successors and clones produced by a variety of manufacturers.

Although the current generation of X86 microprocessors are 32-bit microprocessors having 32 address lines (except the 80386SX microprocessor which has only 24 address lines), the installed software base is still predominately written for 16-bit addresses compatible with the old 8086/8088 microprocessors. Newer software is being developed to take advantage of 32-bit addresses afforded by the current generation of X86 microprocessors. However, while the large base of 16-bit address software continues in use, it is necessary to be able to generate both 16-bit and 32-bit addresses. To generate addresses that are compatible with both the current generation of X86 compatible 32-bit microprocessors and older 16-bit X86 compatible microprocessors, a flexible address generation scheme must be developed. Two components must be generated for an X86 address, the effective address and the linear address. The effective address is generated from three terms, the base, the displacement and the index; that is,

Effective Address → Base + Displacement + Index.

The linear address is generated from the effective address and from a segment base term; that is,

Linear Address → Effective Address + Segment Base.

In a microprocessor compatible with X86 architecture, it is necessary to calculate the linear and effective address for memory references with a 16 or 32-bit address space. Since memory references occur frequently in the execution of X86 code streams, the method to generate these address should be fast.

U.S. Patent No. 5,204,953 to Dixit discloses a circuit for generating addresses at a high clock rate within the 80386 microprocessor. The linear address calculation uses a three input adder, and the effective address calculation uses a two input adder. In the case where the three components of the effective address are required, a two step process is used, with an interim effective address being generated during the first cycle. Approximately twenty percent of the time, the effective address calculation requires the three input adder. Thus, while the circuit of the Dixit patent provides an improvement in performance over the original 80386 microprocessor address calculation, the two step process inherent in some address calculations provides room for further improvement.

U.S. Patent No. 5,233,553 to Shak et al. discloses a circuit for emulating the intermediate 16-bit truncation of the address in X86 architecture using a 32-bit adder. The circuit uses three terms to generate the linear address. Address calculation is performed with a 32-bit carry save adder for the linear address in parallel with a regular 32-bit adder for the effective address. The lower 16 bits of both addresses are compared to determine if the carry needs to be propagated to the high order 16 bits of the linear address. To generate the final linear address, two 16-bit adders are used, one for the low order 16 bits and one for the high order 16 bits. The critical path through this design is the following: one multiplexer delay, a carry save add (no carry propagation), a 16-bit add (low order bit of the linear address), the compare unit, and another 16-bit adder. With this implementation, a second cycle is necessary to generate the address when an index field is specified.

## SUMMARY OF THE INVENTION

It is therefore an object of the present invention to provide a scheme for calculating either 16 or 32-bit address mode with a minimum of hardware and a minimum delay.

According to the invention, there is provided a circuit for address calculation which calculates both the effective and linear addresses needed to generate an address compatible for X86 architecture compatible mode. The circuit generates different addresses based on the mode of operation. The circuit uses the same carry save adder for generating both the linear and the effective addresses. The address generation circuit calculates both the effective address and the linear address in parallel.

In contrast with the Shak et al. circuit as disclosed in U.S. Patent No. 5,233,553, the present invention modifies the carry-in to the high order 16-bit adder. With a carry select adder only, the selection of the incremented or non-incremented sum is necessary which is one logic delay versus an eight logic delay for a 16-bit adder. This invention thus offers a significant speed advantage which allows the capability to add the index input in the same cycle and still meet the cycle time of the machine. The index input in an implementation of the invention adds a carry save adder delay but, when compared with the prior art, saves seven logic delays by manipulating the carry into the high order bit section of the linear address calculation.

## BRIEF DESCRIPTION OF THE DRAWINGS

The foregoing and other objects, aspects and advantages will be better understood from the following detailed description of a preferred embodiment of the invention with reference to the drawings, in which:

Figure 1 is a block diagram showing a circuit for address calculation according to a preferred embodiment of the invention; and
Figure 2 is a logic diagram of the logic circuit shown in the circuit of Figure 1.

## DETAILED DESCRIPTION OF A PREFERRED EMBODIMENT OF THE INVENTION

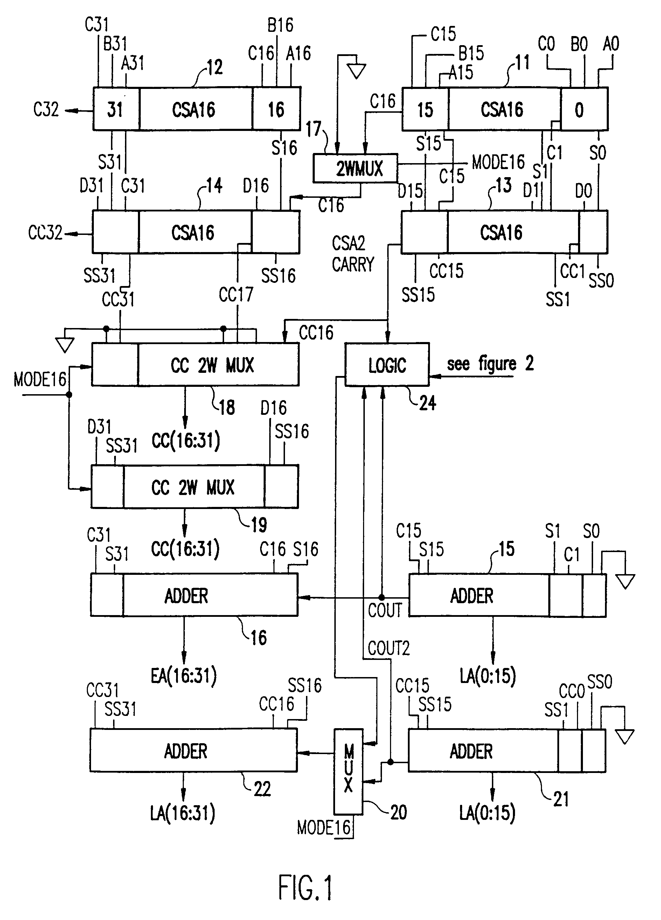

Referring now to the drawings, and more particularly to Figure 1, there is shown a preferred embodiment of the address calculation circuit which calculates the effective address (EA) and the linear address (LA) in parallel, thus realizing a significant performance improvement over the prior art. The EA is generated from three terms. These terms are the base, the displacement and the index. The circuit comprises two three input carry save adders 11 and 12 which respectively receive the low order and high order 16 bits of the base, displacement and index terms used in the calculation of the effective address. The inputs provided to the carry save adders 11 and 12 are designated as bus A, the load displacement, bus B, the displacement, and bus C, the index. The LA is generated from the same terms as the effective address plus the segment, on bus D. The base, displacement, index, and segment terms are taken from different parts of an instruction that references memory. Two other three input carry save adders 13 and 14 receive respectively the low and high order 16 bits of the segment term on bus D as well as the carry and sum outputs of carry save adders 11 and 12. The sums and carries output from carry save adders 11 and 12 are connected to carry select adders 15 and 16, respectively, for generating the effective address (EA). In a carry select adder, two sums are generated internally, a first sum assuming a carry input of binary "0" and a second sum assuming a carry input of binary "1". The carry data directs the appropriate sum to the output of the adder with a multiplexer function. This can be accomplished in a one logic delay.

The circuit is controlled by the mode 16 input as the control input to two way multiplexers 17, 18, 19, and 20. This input controls the generation of 16-bit compatible or 32-bit compatible addresses. When generating 32-bit addresses, LA is the sum of the data on buses A, B, C, and D, EA is the sum of the data on buses A, B and C. More particularly, the mode 16 input causes the carry C16 output from carry save adder 11 to be propagated to the carry save adder 14 by multiplexer 17. The low order carries CC(0:15) from carry save adder 13 are supplied directly to carry select adder 21, while the carry CSA2 from carry save adder 13 and the high order carries CC(17:31) from carry save adder 14 are supplied via multiplexer 18 to carry select adder 22. The low order sums SS(0:15) from carry save adder 13 are supplied directly to carry select adder 21, while the high order sums SS(16:31) from carry save adder 14 are supplied via multiplexer 19 to carry select adder 22. The carry out, COUT, from carry select adder 15 is propagated to carry select adder 16. The carry out, COUT2, from carry select adder 21 is supplied to one input of the two way multiplexer 20. The multiplexer 20 receives as its second input the output F of logic 24 having as its inputs CSA2 from carry save adder 13, COUT from carry select adder 15 and COUT2 from carry select adder 21. For 32-bit addresses, the multiplexer 20 selects the COUT2 input which is propagated to carry select adder 22. Thus, the 32-bit EA is taken from adders 15 and 16, and the 32-bit LA is taken from adders 21 and 22.

However, when generating 16-bit addresses, the mode 16 input causes EA to be computed as the sum of the low order 16 bits of the data on buses A, B and C in carry save adder 11 and carry select adder 15. That is, the EA is taken directly from adder 15 which receives as its inputs the sum and carry outputs from carry save adder 11. The LA is computed as the sum of the low order 16 bits of data on buses A, B and C in carry save adder 11 and the full 32 bits of data on bus D in carry save adder 13 and carry select adders 21 and 22. Note that the high order bits D(16:31) of the D bus are supplied via multiplexer 19 to adder 22. The mode 16 input causes the two way multiplexer 17 to propagate a binary "0" as carry C16, the two way multiplexer 18 to propagate binary "0s" as carries CC(16:31), and the two way multiplexer 19 to input the high order 16 bits on the D bus to adder 22. The mode 16 input causes the two way multiplexer 20 to select the output F of the logic 24 as the carry input to adder 22. Here again, the LA is taken directly from adders 21 and 22.

This invention transfers the carry out of the carry save adder 13 from the normal path of multiplexer 18 and data input CC16 to the carry input of carry select adder 22 through logic 24. The delay through a 16-bit adder from the low order data input is an eight logic delay. According to the present invention, the delay is reduced to three logic delays, two delays in logic 24 and one delay at the output of the carry select adder 22. This saving in delay allows the generation of the full effective address (EA) and linear address (LA) in one machine cycle. Thus, the EA and LA are generated in parallel. Without the invention, the delay of two full 16-bit adders in series would not meet the performance objective of a fast address generation circuit.

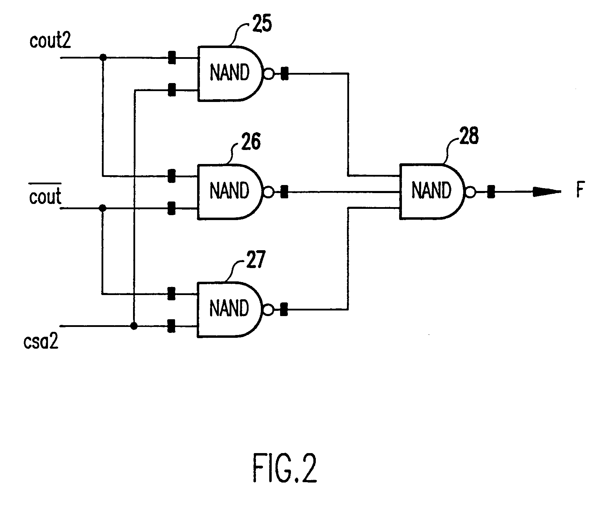

The circuitry of logic 24 is shown in more detail in Figure 2, to which reference is now made. As mentioned, the inputs are the carry, CSA2, from carry save adder 13, the carry out, COUT, from carry select adder 15, and the carry out, COUT2, from carry select adder 21. The COUT2 signal is input to NAND gates 25 and 26. The COUT signal is first inverted to provide the input $\overline{COUT}$ to NAND gates 26 and 27. The CSA2 signal is input to NAND gates 25 and 27. The outputs of the NAND gates 25, 26 and 27 are input to NAND gate 28 to provide the output F supplied to one input of the two way multiplexer 20. The output F is thus $COUT2 \cdot CSA2 + \overline{COUT} \cdot COUT2 + \overline{COUT} \cdot CSA2$ as defined by the following truth table:

| COUT2,CSA2 COUT | 00 | 01 | 11 | 10 |
|---|---|---|---|---|
| 0 | 0 | 1 | 1 | 1 |
| 1 | 0 | 0 | 1 | 0 |

While the invention has been described in terms of a single preferred embodiment, those skilled in the art will recognize that the invention can be practiced with modification within the scope of the appended claims.

**Claims**

1. An address generation circuit for generating a pair of memory addresses in parallel, said address generating circuit comprising:
   a first three input carry save adding means (11,12) for adding a pair of address offsets to a base address to generate a first set of output sums and carries;
   a second three input carry save adding means (13,14) for adding a segment base address to output sums and carries generated by said first carry save adder to generate a second set of output sums and carries;
   a first two input carry select adding means (15,16) for adding the first set of output sums and carries to generate an effective address; and
   a second two input carry select adding means (21,22) for adding the second set of output sums and carries to generate a linear address, said effective address and linear address being generated in one machine cycle, thereby generating the effective and linear addresses in parallel.

2. The address generation circuit recited in claim 1 wherein each of said first and second carry save adding means and said first and second two input carry select adding means are divided into low order and high order halves, further comprising multiplexing means (17,18,19) responsive to a mode signal for interconnecting said low order and high order halves so as to produce either first or second width addresses for said effective and linear addresses.

3. The address generation circuit recited in claim 2 wherein each of said low order and high order halves are 16-bit units and said multiplexing means selects between 16-bit and 32-bit addressing modes in response to said mode signal.

4. An address generation circuit for generating a pair of memory addresses in parallel, said address generating circuit comprising:
   first and second N-bit three input carry save adders (11,12) for adding a pair of address offsets to a base address to generate first and second sets of output sums and carries;
   third and fourth N-bit three input carry save adders (13,14) for adding a segment base address to output sums and carries generated by said first and second carry save adders to generate a third and fourth sets of output sums and carries;
   a first two way multiplexer (17) responsive to a mode N select signal for propagating either a carry out signal from said first carry save adder or a binary "0" signal to said fourth carry save adder;
   a second two way multiplexer (19) responsive to said mode N select signal for passing either the sums generated by said fourth carry save adder or said segment base address as a sums signal output;

a third two way multiplexer (18) responsive to said mode N select signal for passing either a carry out signal from said third carry save adder and the carries generated by said fourth carry save adder or binary "0s" as a carries signal output;

first and second N-bit two input carry select adders (15,16) for adding the first set of output sums and carries to generate an effective address; and

third and fourth N-bit two input carry select adders (21,22), said third N-bit two input carry select adder adding the sums and carries of the second set of output sums and carries generated by said third carry save adder and said fourth N-bit two input carry select adder adding said sums output from said second two way multiplexer and said carries signal output form said third two way multiplexer to generate a linear address, said effective address and linear address being generated in one machine cycle, thereby generating the effective and linear addresses in parallel.

5. The address generation circuit recited in claim 4 further comprising:

logic means (24) responsive to said carry out signal from said third carry save adder and to carry out signals from each of said first and third N-bit two input carry select adders for generating a logic output signal; and

a fourth multiplexer (20) responsive to said mode N signal for selecting either the carry out signal from said third N-bit two input carry select adder or said logic output signal as a carry input signal to said fourth N-bit two input carry select adder.

6. The address generation circuit recited in claim 5 wherein said logic means comprises logic circuitry performing the logic function $COUT2 \cdot CSA2 + \overline{COUT} \cdot COUT2 + \overline{COUT} \cdot CSA2$, where COUT2 is the carry out signal of said third N-bit two input carry select adder, CSA2 is the carry out signal of said third N-bit carry save adder, and $\overline{COUT}$ is the carry out signal of said first N-bit two input carry select adder.

7. The address generation circuit recited in claim 6 wherein N is 16 and said address generation circuit selectively generates 16-bit or 32-bit effective and linear addresses in parallel.

FIG.1

FIG.2